# EUROPÄISCHE PATENTSCHRIFT

(11) **EP 1 669 257 B1**
(45) Veröffentlichungstag und Bekanntmachung des Hinweises auf die Patenterteilung: **25.04.2007**
(21) Anmeldenummer: 04029064.5
(22) Anmeldetag: 08.12.2004
(51) Int. Cl.: B60R 21/26

(54) **Gasgenerator**
Gas generator
Générateur de gaz

(43) Veröffentlichungstag der Anmeldung: 14.06.2006
(73) Patentinhaber: Delphi Technologies, Inc., Troy, MI 48007 (US)
(72) Erfinder: Blessing, Uwe, 90409 Nürnberg (DE); Gärtner, Jochem, 90408 Nürnberg (DE); Lehniger, Peter, 91059 Erlangen (DE); Winterhalder, Marc Alexander, 84518 Garching/Alz (DE)
(74) Vertreter: Manitz, Finsterwald & Partner GbR

(56) Entgegenhaltungen:
- EP-A- 1 293 394
- EP-A- 1 354 774
- EP-A- 1 386 793
- US-A1- 2004 046 373
- US-B1- 6 364 354

## Beschreibung

Die vorliegende Erfindung betrifft einen Gasgenerator, insbesondere für Luftsackmodule in Kraftfahrzeugen, mit zwei Generatorstufen, die jeweils in einem eigenen separaten Druckgehäuse wenigstens einen Zünder, zumindest eine Treibladung und wenigstens eine Brennkammer umfassen-, wobei eine innere Generatorstufe zumindest im Wesentlichen innerhalb einer äußeren Generatorstufe angeordnet ist.

Aus der EP 1477375 A1 ist ein solcher zweistufiger Gasgenerator nach dem Oberbegriff des Anspruchs 1 bekannt.

Aus der US 2004/0046373 A1 ist ein zweistufiger Gasgenerator bekannt, dessen Generatorstufen allerdings nicht jeweils über ein separates Druckgehäuse verfügen, sondern durch eine gemeinsame Zwischenwand voneinander getrennt sind und zudem eine weitere, die Druckgehäuse nach oben hin abgrenzende Wand miteinander teilen.

Bei den aus dem Stand der Technik bereits bekannten zweistufigen Gasgeneratoren können in Abhängigkeit von den jeweiligen Anforderungen eine oder mehrere Generatorstufen gezündet werden. Der gleiche Gasgenerator kann bei Fahrzeuganwendungen somit für verschiedene Luftsackmodule und verschiedene Fahrzeugtypen verwendet werden. Mit Hilfe einer entsprechenden Steuerung kann aber auch bei einem mit einem Luftsackmodul in einem Fahrzeug installierten Gasgenerator in Abhängigkeit von der Stärke des Aufpralls, anderen Unfallbedingungen oder der Benutzungssituation, z.B. der Art der Sitzbelegung, entschieden werden, welche Generatorstufen zu welchem Zeitpunkt gezündet werden.

Bei solchen mehrstufigen Gasgeneratoren muss durch die geometrische Anordnung und die Gestaltung der einzelnen Generatorstufen verhindert werden, dass beim Zünden einer Generatorstufe auch die Treibladung der anderen Generatorstufe unbeabsichtigt gezündet wird (sympathetic ignition). Die einzelnen Generatorstufen müssen also entsprechend voneinander isoliert sein, wobei aber gleichzeitig das Gewicht des Gasgenerators möglichst gering bleiben soll. Da es sich bei derartigen Gasgeneratoren um in sehr hoher Stückzahl gefertigte Massenprodukte handelt, soll zudem die Herstellung des Generators trotz dieser oben erwähnten Anforderungen möglichst einfach sein. Insbesondere sollen möglichst wenig unterschiedliche Teile zum Einsatz kommen.

Aufgabe der vorliegenden Erfindung ist es, einen Gasgenerator der eingangs genannten Art zu schaffen, der möglichst einfach und kostengünstig in hoher Stückzahl gefertigt werden kann, wobei es insbesondere auch auf möglichst einfache und kostengünstige Weise möglich sein soll, unterschiedliche Gasgeneratoren für verschiedene Anforderungen zur Verfügung zu stellen.

Diese Aufgabe wird erfindungsgemäß dadurch gelöst, dass die beiden Generatorstufen zumindest teilweise zusammen mit einer gemeinsamen, au-ßerhalb eines Druckgehäuses der äußeren Generatorstufe angeordneten Filtereinheit in einem gemeinsamen Filtergehäuse angeordnet sind.

Die Anordnung der beiden Generatorstufen ineinander (so genanntes "stage-in-stage"-Design") spart Platz und ermöglicht eine insgesamt möglichst symmetrische Anordnung. Durch die Anordnung der beiden Generatorstufen in einem gemeinsamen, die Filtereinheit enthaltenden Filtergehäuse kann im Inneren des Filtergehäuses eine zusätzliche Kammer außerhalb der Brennkammern geschaffen werden, welche die Gase durchströmen müssen. Dabei werden sie nicht nur gefiltert, so dass ein möglichst partikelfreies Gas in den Luftsack gelangt, sondern können auch abkühlen. Da die beiden Generatorstufen jeweils ein eigenes Druckgehäuse aufweisen und nicht etwa ein gemeinsames Gehäuse mit einer Trennwand vorgesehen ist, kann der Gasgenerator modular aus verschiedenen Gehäusebausteinen zusammengesetzt werden. Beispielsweise kann ein immer gleiches Druckgehäuse für die äußere Generatorstufe mit unterschiedlichen Druckgehäusen für die innere Generatorstufe kombiniert werden, so dass die Kosten für die Herstellung verschiedener Gasgeneratoren reduziert werden können. Durch die Anordnung der Filtereinheit außerhalb des äußeren Druckgehäuses kann dieses relativ klein ausgeführt werden, wodurch Material und Gewicht eingespart werden. Es wurde erkannt, dass es nicht erforderlich ist, die Filtereinheit innerhalb des äußeren Druckgehäuses anzuordnen, sondern dass es vielmehr genügt, ein vergleichsweise dünnwandiges Filtergehäuse vorzusehen, welches dann in vorteilhafter Weise außerdem dazu genutzt werden kann, bestimmte Zusatzfunktionen zu erfüllen.

Vorteilhafte Ausführungsformen der Erfindung sind in den Unteransprüchen und in der Beschreibung in Verbindung mit den beigefügten Zeichnungen beschrieben.

Nach einer aufgrund ihrer Einfachheit bevorzugten Ausführungsform der Erfindung ist das Druckgehäuse der äußeren Generatorstufe zylindrisch, und die Zünder der beiden Generatorstufen sind zumindest näherungsweise symmetrisch bezüglich einer Mittelachse dieses Druckgehäuses angeordnet. Diese Anordnung der Zünder ermöglicht eine zumindest weitgehend symmetrische Gewichtsverteilung innerhalb des Druckgehäuses. Zudem ermöglicht die zylindrische Form des äußeren Druckgehäuses eine rotationssymmetrische Ausströmung der in dem Generator erzeugten Gase.

Vorzugsweise sind beide Generatorstufen zylindrisch ausgebildet.

Ein in hohem Maße symmetrisches Ausströmverhalten kann man erhalten, wenn die Mittelachsen der beiden Zünder sowie die Mittelachsen der Gehäuse und der Filtereinheit in einer gemeinsamen Ebene liegen.

Nach einer weiteren vorteilhaften Ausführungsform der Erfindung füllt die innere Generatorstufe die äußere Generatorstufe in der Höhe fast vollständig aus. Dies sorgt für eine optimale Platzausnutzung, da ein zu der äußeren Generatorstufe gehöriger Bereich oberhalb der inneren Generatorstufe aus strömungstechnischen Gründen nicht optimal ausgenutzt würde. Zudem wird die Wahrscheinlichkeit verringert, dass bei einem Zünden allein der äußeren Generatorstufe die innere Generatorstufe unbeabsichtigt mitgezündet wird, da zumindest die obere Wand der inneren Generatorstufe nicht direkt von der verbrennenden Treibladung erhitzt wird.

Die Ausnutzung des vorhandenen Raums kann weiterhin dadurch optimiert werden, dass die Filtereinheit und die beiden Generatorstufen das Filtergehäuse zumindest im Wesentlichen vollständig ausfüllen.

Gemäß einer weiteren bevorzugten Ausführungsform der Erfindung ist die Filtereinheit ringförmig ausgebildet und umgibt die äußere Generatorstufe. Eine derartige Anordnung zeichnet sich wieder durch ihre Symmetrie aus. Eine ringförmige Filtereinheit ist zudem vergleichsweise einfach zu montieren.

Vorzugsweise weist der Filterring dabei eine kleinere axiale Länge auf als die äußere Generatorstufe. Dadurch können insgesamt Einbauraum und Gewicht gespart werden, wenn es aufgrund der jeweils gewünschten Filterwirkung nicht nötig ist, dass ein Filterring sich über die ganze axiale Länge der äußeren Generatorstufe erstreckt.

Um das Gas aus der äußeren Generatorstufe durch den Filter und schließlich aus dem Gasgenerator in den aufzublasenden Luftsack zu leiten, sind nach einer bevorzugten Ausführungsform der Erfindung in dem Druckgehäuse der äußeren Generatorstufe Ausströmöffnungen vorgesehen, die auf Höhe des unteren Endes der Filtereinheit angeordnet sind und in einen die Filtereinheit aufnehmenden Raum münden. Dieser Raum ist durch das Filtergehäuse von außen begrenzt und muss von der Filtereinheit nicht vollständig ausgefüllt sein. Innerhalb dieses Raumes kann das erzeugte Gas noch vor Verlassen des Gasgenerators durch die Ausdehnung innerhalb desselben abkühlen. Auf Höhe des unteren Endes der Filtereinheit angeordnete Ausströmöffnungen ermöglichen in Verbindung mit geschickt angeordneten Ausströmöffnungen des Filtergehäuses einen relativ langen Filterweg und somit eine besonders zuverlässige Filterung und eine besonders wirksame Abkühlung des Gases.

Besonders vorteilhaft ist es, wenn die erwähnten Ausströmöffnungen des Druckgehäuses der äußeren Generatorstufe tiefer liegen als Ausströmöffnungen des Filtergehäuses. Das durch die tiefer liegenden Ausströmöffnungen des Druckgehäuses aus der äußeren Generatorstufe ausströmende Gas strömt in diesem Fall vor dem Verlassen des Filtergehäuses durch den Filter nach oben. Da es generell vorteilhafter ist, die Ausströmöffnungen, durch die das Gas den Gasgenerator verlässt, möglichst weit oben anzuordnen, kann mit einer solchen Anordnung auf besonders elegante Weise ein langer Filterweg realisiert werden, ohne dass die Abmessungen des Gasgenerators in unnötiger Weise vergrößert würden.

Um insgesamt auch für das aus der inneren Generatorstufe ausströmende Gas einen möglichst langen Strömungsweg zu erzeugen, liegen Ausströmöffnungen des inneren Druckgehäuses vorzugsweise etwa auf der Höhe der Ausströmöffnungen des Filtergehäuses. Bei relativ weit oben angeordneten Ausströmöffnungen des Filtergehäuses und vergleichsweise weit unten gelegenen Ausströmöffnungen des äußeren Druckgehäuses muss das Gas der inneren Generatorstufe also zunächst von den Ausströmöffnungen der inneren Generatorstufe nach unten zu den Ausströmöffnungen der äußeren Generatorstufe gelangen, von wo es dann durch den Filter hindurch wieder nach oben gelangt und dann das Filtergehäuse etwa auf der Höhe der Ausströmöffnungen der inneren Generatorstufe verlässt.

Die Ausströmöffnungen der inneren Generatorstufe sind vorzugsweise ebenfalls radial ausgerichtet.

Nach einer weiteren bevorzugten Ausführungsform der Erfindung weist das Filtergehäuse auf Höhe der Filtereinheit eine radiale Erweiterung auf. Insgesamt kann zur Minimierung des Platzbedarfes das Filtergehäuse sich im Wesentlichen von außen an das Druckgehäuse der äußeren Generatorstufe anschmiegen, wobei in dem Bereich, in dem die Filtereinheit angeordnet ist, die besagte radiale Erweiterung zur Aufnahme der insbesondere ringförmigen Filtereinheit ausgebildet sein kann.

Die Zünder der beiden Generatorstufen können an einer gemeinsamen Bodenplatte befestigt sein, was die Herstellung des Gasgenerators vereinfacht. Zudem wird die mechanische Stabilität des gesamten Generators erhöht.

Es ist zur Vereinfachung des Herstellungsprozesses ganz besonders vorteilhaft, Schweißverbindungen zwischen die Druckgehäuse bildenden Bauteile jeweils durch das gleiche Schweißverfahren zu bilden. In Frage kommen insbesondere Kondensatorentladungsschweißen, Laserschweißen oder Reibschweißen. Die Verwendung des gleichen Schweißverfahrens für alle Verbindungen spart Zeit und damit Kosten bei der Herstellung des erfindungsgemäßen Gasgenerators. Je nach verwendetem Verfahren und Geometrie der Generatorstufen können gegebenenfalls sogar mehrere Schweißverbindungen in einem Arbeitsgang gebildet werden.

Das Filtergehäuse wird vorzugsweise mit Hilfe einer Umformung, beispielsweise einer Rollierung oder Bördelung, an der vorher hergestellten Baugruppe aus den beiden Generatorstufen befestigt. Eine derartige Befestigung kann auf einfache Weise realisiert werden. Alternativ oder zusätzlich kann das Filtergehäuse aber auch mit der Bodenplatte und/oder den Generatorstufen verschweißt sein.

Vorzugsweise ist das Filtergehäuse als Generatoraußengehäuse ausgebildet. Ein zusätzliches Generatoraußengehäuse entfällt also, was Material und damit Kosten, Gewicht und Einbauraum spart.

Das Filtergehäuse kann gemäß einer bevorzugten Weiterbildung der Erfindung einen Befestigungsflansch zur Befestigung des Gasgenerators an einem Luftsackmodul aufweisen. Damit kann das Filtergehäuse als Generatoraußengehäuse verwendet werden, ohne dass ein zusätzliches Verbindungsstück zur Befestigung am Luftsackmodul benötigt wird.

Besonders vorteilhaft ist es, wenn Ausströmöffnungen des Filtergehäuses in einem oberen Bereich der Filtereinheit vorgesehen sind. Eine solche Anordnung ist insbesondere dann zu bevorzugen, wenn das Filtergehäuse auch das Generatoraußengehäuse bildet, da für eine optimale Entfaltung des Luftsackmoduls das Gas möglichst weit oben, aber dennoch in radialer Richtung aus dem Gasgenerator ausströmen sollte.

Nach einer weiteren bevorzugten Ausführungsform der Erfindung ist das Filtergehäuse durch den mittels der Generatorstufen erzeugten Gasdruck dehnbar, so dass es eine Druckpufferfunktion unterstützen kann. Durch eine solche Expansion des Filtergehäuses kann der Druck des ausströmenden Gases verringert werden, so dass der Luftsack mit geringerer Wucht aufgeblasen wird als bei einem weniger nachgiebig ausgestalteten Filtergehäuse. Von besonderer Bedeutung ist dies vor allem bei hohen Umgebungstemperaturen, die im Vergleich zu niedrigen Umgebungstemperaturen einen höheren Maximaldruck zur Folge haben, der sich ohne Druckpuffer im Aufblasverhalten des Luftsacks voll niederschlagen würde. Die Dehnbarkeit des Filtergehäuses kann dabei so eingestellt werden, dass das Aufblasverhalten von der Umgebungstemperatur weniger abhängig wird, sich der Luftsack also im Sommer nicht zu "aggressiv" und im Winter "dynamisch" genug verhält. Hierbei ist auch zu beachten, dass bestehende Vorschriften eine einwandfreie Funktionsweise bei gleichzeitiger Einhaltung der Sicherheitsbedingungen über einen Temperaturbereich von -35°C bis +85°C verlangen, d.h. der Gasgenerator auch für sehr niedrige Temperaturen ausgelegt sein muss. Die Druckpufferfunktion des Filtergehäuses stellt insbesondere sicher, dass bei sehr hohen Temperaturen die erhöhte Druckentwicklung nicht zu einem Bersten des Filtergehäuses führt.

Das Filtergehäuse kann nach einer vorteilhaften Weiterbildung der Erfindung so ausgebildet sein, dass es die Generatorstufen, die Filtereinheit und eine den Generatorstufen gemeinsame Bodenplatte klammerartig umschließt. Diese Klammerform kann beispielsweise durch eine Rollierung an der Unterseite des Filtergehäuses hergestellt werden. Durch eine solche Anordnung wird die Stabilität des gesamten Gasgenerators erhöht und das Filtergehäuse mit einer Zusatzfunktion versehen.

Im Folgenden wird die vorliegende Erfindung anhand eines bevorzugten Ausführungsbeispiels und unter Bezugnahme auf die beiden beigefügten Figuren näher erläutert. Im Einzelnen zeigen die Figuren:
- Fig. 1: einen axialen Schnitt durch einen erfindungsgemäßen Gasgenerator und
- Fig. 2: einen radialen Schnitt durch den Gasgenerator aus Fig. 1 in teilweise vereinfachter Darstellung.

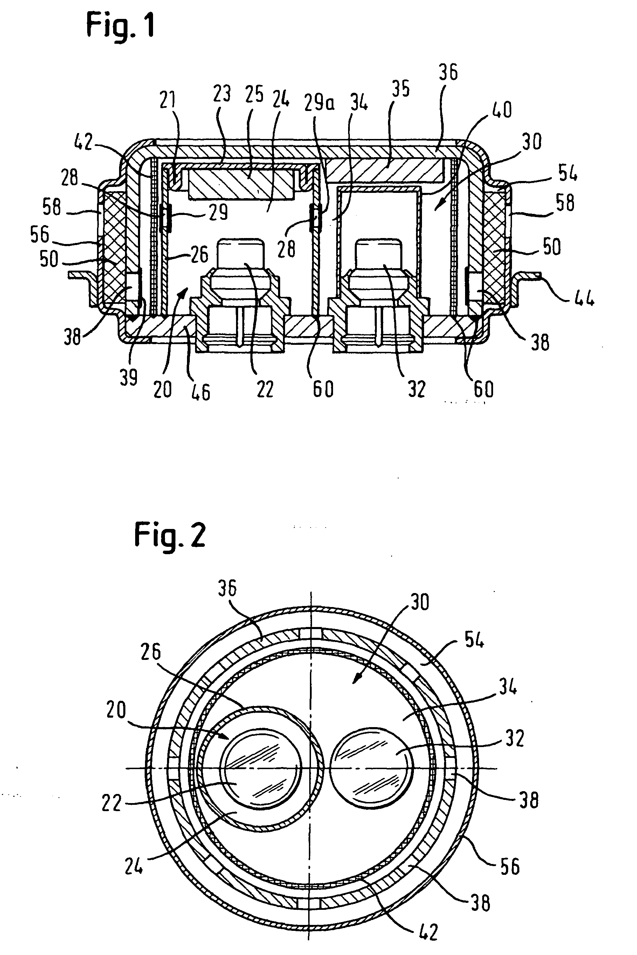

Fig. 2 verdeutlicht den Grundaufbau des zweistufigen Gasgenerators, der insgesamt eine im Wesentlichen zylindrische Form besitzt. Eine innere Generatorstufe 20, welche von einem zylindrischen Druckgehäuse 26 begrenzt ist, ist asymmetrisch innerhalb einer größeren zylindrischen äußeren Generatorstufe 30 angeordnet.

Der Innenraum des Druckgehäuses 26 der inneren Generatorstufe 20 bildet eine Brennkammer 24, in der eine in den Figuren nicht dargestellte Treibladung in Form von gepressten Brennstoffpellets gelagert ist. Wie man in der Fig. 1 besser erkennt, besitzt die äußere Generatorstufe 30 ein zylindrisches Druckgehäuse 36, dessen Innenraum eine Brennkammer 34 bildet, in der sich eine zweite ebenfalls nicht dargestellte Treibladung gleicher Art befindet. Das äußere Druckgehäuse 36 besitzt eine deutlich größere Wandstärke als das Druckgehäuse 26 der inneren Generatorstufe 20, da aufgrund der geringeren Wandoberfläche des Druckgehäuses 26 der inneren Generatorstufe 20 eine geringere Wandstärke genügt, um den auftretenden Drücken standzuhalten.

Wie in Fig. 2 gut erkennbar, sind zwei Zünder 22, 32 mit jeweils kreisförmigem Querschnitt näherungsweise symmetrisch zu einer Mittelachse des Druckgehäuses 36 der äußeren Generatorstufe 30 angeordnet. Der in den beiden Figuren rechts liegende Zünder 32 gehört zur äußeren Generatorstufe 30, während der links dargestellte Zünder 22 zur inneren Generatorstufe 20 gehört und mittig in deren Druckgehäuse 26 angeordnet ist.

Die innere Generatorstufe 20 liegt im Wesentlichen in der in den Figuren links liegenden Hälfte des Gasgenerators bzw. der äußeren Generatorstufe 30. Das Druckgehäuse 26 der inneren Generatorstufe 20 erstreckt sich, wie in Fig. 1 erkennbar ist, in der Höhe fast bis zur Oberseite des Druckgehäuses 36 der äußeren Generatorstufe 30.

Ein mit geringem Abstand zur Seitenwand des Druckgehäuses 36 der äußeren Generatorstufe 30 verlaufendes Auffanggitter 42 liegt bereichsweise zwischen der inneren Generatorstufe 20 und dem Druckgehäuse 36. Die Brennstoffpellets der Treibladungen werden von dem Auffanggitter 42 daran gehindert, in dem Druckgehäuse 36 ausgebildete, weiter unten beschriebene Ausströmöffnungen 38 zu verstopfen.

Wie in Fig. 2 gut zu erkennen ist, ist ein Filtergehäuse 56 koaxial um das Druckgehäuse 36 der äußeren Generatorstufe 30 herum angeordnet. Beide Generatorstufen 20, 30 liegen vollständig innerhalb des Filtergehäuses 56, das oben und unten zur Material- und Gewichtseinsparung mit einer relativ großen Öffnung versehen ist und somit praktisch einen Gehäusering darstellt, der die Anordnung aus Druckgehäuse 36 und einer nachstehend näher beschriebenen Bodenplatte 46 radial vollständig umschließt sowie oben und unten umgreift. Der außen vom Filtergehäuse 56 und innen vom Druckgehäuse 36 der äußeren Generatorstufe 30 begrenzte Raum 54 dient u.a. zur Aufnahme einer nachstehend erläuterten Filtereinheit 50.

Die in Fig. 2 der Einfachheit halber nicht dargestellte Filtereinheit 50 ist ringförmig zwischen dem Druckgehäuse 36 der äußeren Generatorstufe 30 und dem Filtergehäuse 56 angeordnet. Der sich um das Druckgehäuse 36 herum erstreckende Filterring 50 erstreckt sich dabei nicht über die gesamte Höhe des Druckgehäuses 36, sondern besitzt eine axiale Erstreckung, die nur etwa zwei Drittel der gesamten axialen Erstreckung des Gasgenerators beträgt.

Das eine wesentlich geringere Wandstärke als das Druckgehäuse 36 der äußeren Generatorstufe 30 aufweisende Filtergehäuse 56 schmiegt sich, wie in Fig. 1 dargestellt, von außen an dieses an, wobei im Bereich der Filtereinheit 50 eine radiale Erweiterung ausgebildet ist, welche sich wie die Filtereinheit 50 ringartig um das Druckgehäuse 36 herum erstreckt und zur Aufnahme der Filtereinheit 50 dient. Die Kontur des Filtergehäuses 56 entspricht somit im Wesentlichen der Außenkontur des Druckgehäuses 36 mit dem dieses umgebenden Filterring 50.

Wie insbesondere Fig. 2 zeigt, liegen die Mittelachsen der Gehäuse 26, 36, 56, der ringförmigen Filtereinheit 50, des Auffanggitters 42 sowie der Zünder 22, 32 in einer gemeinsamen Ebene, wobei die Gehäuse 36, 56, die Filtereinheit 50 sowie das Auffanggitter 42 konzentrisch angeordnet sind und deren Mittelachsen folglich zusammenfallen.

In Fig. 1 erkennt man, dass die äußere Generatorstufe 30 mit einem Boostercontainer 40 ausgestattet ist, welcher über den Zünder 32 gestülpt ist und ebenfalls eine zylindrische Form aufweist. Dieser Boostercontainer 40 ist ebenso wie der verbleibende Raum der Brennkammer 34 mit Brennstoffpellets gefüllt und öffnet sich erst, wenn ein gewisser Schwellendruck aufgebaut ist, so dass in der Brennkammer 34 sehr schnell ein sehr hoher Druck aufgebaut werden kann. Aufgrund des geringeren Volumens der inneren Generatorstufe 20 kann diese ohne einen solchen Boostercontainer auskommen, optional kann aber über den Zünder 22 der inneren Generatorstufe 20 ebenfalls ein Boostercontainer gestülpt werden.

Sowohl in der kleineren inneren Generatorstufe 20 als auch in der äußeren Generatorstufe 30 sind Volumenausgleichsstücke 25 bzw. 35 vorgesehen. Diese verhindern eine Bewegung der Brennstoffpellets der Treibladungen, so dass diese nicht durch auftretende Reibung beschädigt werden können und eine unerwünschte Geräuschentwicklung vermieden wird. Das Druckgehäuse 26 der inneren Generatorstufe 20 schließt an seiner Oberseite mit einem Deckel 23 mit kreisförmigem Querschnitt ab, der an seinem Außenrand einen umlaufenden, im Schnitt U-förmigen Doppelfalz 21 aufweist. Dieser verbessert die Abdichtung des Druckgehäuses 26 an dessen oberem Rand und verleiht dem Deckel 23 eine gewisse Flexibilität. Nach Zündung der inneren Generatorstufe 20 wird der Deckel 23 durch den in dem Druckgehäuse 26 herrschenden Druck nach oben gedrückt, bis er nach Überwindung des vorhandenen axialen Zwischenraumes an das Druckgehäuse 36 der äußeren Generatorstufe 30 anstößt. Diese Bewegung des Deckels 23 wird durch seinen die notwendige Weglänge bereitstellenden Doppelfalz 21 ermöglicht, ohne dass die Abdichtung des Gehäuses 26 aufgrund des nach oben gedrückten Deckels 23 beeinträchtigt wird. Bei einer Zündung der äußeren Generatorstufe 30 hingegen wird der Deckel 23 durch den von außen insbesondere aufgrund des axialen Zwischenraums auf ihn wirkenden Druck an das Druckgehäuse 26 der inneren Generatorstufe 20 gepresst, so dass die innere Generatorstufe 20 zuverlässig abgedichtet wird bzw. bleibt.

Das Druckgehäuse 26 der inneren Generatorstufe 20 besitzt radiale Ausströmöffnungen 28, welche in einem oberen Bereich des Druckgehäuses 26 angeordnet sind. An der Innenseite des Druckgehäuses 26 sind die Ausströmöffnungen 28 von einer Verdämmfolie 29 überdeckt. Die Verdämmfolie 29 kann dabei entweder als Folienring ausgebildet sein und sich um den gesamten Umfang des Druckgehäuses 26 erstrecken, oder aber jede Ausströmöffnung 28 ist mit einer eigenen Verdämmfolie 29 abgedeckt. Die Verdämmfolie 29 reißt bei einem gewissen Mindestdruck und hat somit eine ähnliche Wirkung wie der oben beschriebene Boostercontainer 40: erst wenn ein gewisser Mindestdruck aufgebaut ist, kann das Gas aus der inneren Generatorstufe 20 ausströmen. Von außen sind die Ausströmöffnungen 28 von einem Rückströmschutz 29a verdeckt. Dabei kann es sich beispielsweise um ein Stahlband handeln, das ein Einströmen von Gas aus der äußeren Generatorstufe 30 in die innere Generatorstufe 20 verhindert (reverse flow protection). Damit wird vermieden, dass nach einer Zündung der äußeren Generatorstufe 30 die innere Generatorstufe 20 unbeabsichtigt gezündet wird ("sympathetic ignition"). Die bereits erwähnten Ausströmöffnungen 38 des Druckgehäuses 36 der äußeren Generatorstufe 30 sind ebenfalls radial ausgerichtet und liegen in einem unteren Bereich des Druckgehäuses 36 etwa auf einer Höhe mit dem unteren Ende des Filterrings 50. Wie man in Fig. 2 sieht, sind die Ausströmöffnungen 38 des Druckgehäuses 36 in gleichmäßigen Abständen über den gesamten Umfang des zylindrischen Druckgehäuses 36 verteilt. An der Innenseite des Druckgehäuses 36 sind die Ausströmöffnungen 38 von einer Verdämmfolie 39 überdeckt, welche die gleiche Wirkung hat wie die vorstehend beschriebene Verdämmfolie 29 für die Ausströmöffnungen 28 der inneren Generatorstufe 20.

Das Filtergehäuse 56 besitzt ebenfalls Ausströmöffnungen 58, welche sich im Bereich des oberen Endes des Filters 50 und somit deutlich oberhalb der Ausströmöffnungen 38 des Druckgehäuses 36 befinden. Die Ausströmöffnungen 28 des Druckgehäuses 26 der inneren Generatorstufe 20 befinden sich etwa auf der gleichen Höhe wie die Ausströmöffnungen 58 des Filtergehäuses 56.

Die beiden Generatorstufen 20, 30 besitzen eine gemeinsame kreisförmige Bodenplatte 46 mit zur Aufnahme der Zünder 22, 32 bestimmten, ebenfalls kreisförmigen Aussparungen. Die Zünder sind in diese Aussparungen gesteckt und können entlang ihres Umfangs mit der Bodenplatte 46 verschweißt sein, beispielsweise mittels eines Laserschweißverfahrens.

Das das Druckgehäuse 36 an der Oberseite umgreifende Filtergehäuse 56 umgreift außerdem die Bodenplatte 46 und bildet somit eine den gesamten Gasgenerator klammerartig umschließende Außenhülle. Der die Bodenplatte 46 umgreifende Rand kann durch eine Umformung, wie beispielsweise ein Rollierverfahren oder eine Bördelung, hergestellt werden.

An dem Filtergehäuse 56, welches bei dem dargestellten Ausführungsbeispiel auch das Außengehäuse des Gasgenerators bildet, ist ein Flansch 44 angebracht, der zur Befestigung des Gasgenerators an einem Luftsackmodul dient, womit das Filtergehäuse 56 eine weitere Zusatzfunktion erfüllt.

Die Bauteile, welche die Druckgehäuse der beiden Generatorstufen 20, 30 bilden, sind miteinander verschweißt, wobei für alle Schweißstellen 60 das gleiche Schweißverfahren angewendet werden kann. Dabei sind das äußere Druckgehäuse 36, das Auffanggitter 42 sowie das Druckgehäuse 26 der inneren Generatorstufe 20 mit der Bodenplatte 46 verschweißt. Vorzugsweise wird zunächst das Druckgehäuse 26 der inneren Generatorstufe 20 mit einer Treibladung befüllt und mit der bereits mit den Zündern 22, 32 versehenen Bodenplatte 46 verschweißt. Durch Verschweißen des Auffanggitters 42 und des Druckgehäuses 36 der äußeren Generatorstufe 30 mit der Bodenplatte 46 wird eine Baugruppe gebildet, über die dann die Filtereinheit 50 und das Filtergehäuse 56 gestülpt werden. Das Filtergehäuse 56 wird in einem letzten Schritt durch eine Umformung, beispielsweise eine Rollierung, an der Bodenplatte 46 befestigt. Alternativ oder zusätzlich kann es auch mit der Bodenplatte 46 verschweißt werden. Besonders vorteilhaft ist insbesondere eine Verbindung der Bauteile mittels Kondensatorentladungsschweißen, Laserschweißen oder Reibschweißen.

Für den beschriebenen zweistufigen Gasgenerator sind nun verschiedene Zündfolgen denkbar. Zum einen kann nur eine Stufe, nämlich die äußere Generatorstufe 30, gezündet werden, was beispielsweise vorteilhaft ist, wenn es sich um einen Fahrerairbag für einen vergleichsweise kleinen und dicht hinter dem Lenkrad sitzenden Fahrer handelt. Alternativ können beide Generatorstufen 20, 30 zeitversetzt oder gleichzeitig gezündet werden. Die Zeitspanne zwischen der ersten und der zweiten Zündung kann insbesondere im Bereich von 0 bis 10 ms liegen. Durch eine entsprechende Wahl dieser Zeitspanne können der Zeitpunkt für den maximalen Füllgrad des Airbags und die Geschwindigkeit des Druckanstiegs an unterschiedliche Bedingungen angepasst werden. Im Allgemeinen wird man bei der beschriebenen Anordnung vorzugsweise zunächst die äußere Generatorstufe 30 und dann die innere Generatorstufe 20 zünden. Denkbar wäre auch, zunächst die innere Generatorstufe 20 zu zünden, wobei dann die äußere Generatorstufe 30 infolge der Hitzentwicklung durch das über die Ausströmöffnungen 28 einströmende Gas kurz danach ebenfalls gezündet würde. Aufgrund der in diesem Fall herrschenden Druckverhältnisse können aber die einzelnen Bauteile eventuell vergleichsweise stark belastet werden, so dass die umgekehrte Zündreihenfolge bevorzugt wird.

Insbesondere beim Zünden beider Generatorstufen 20, 30 dient der gemeinsame Expansionsraum außerhalb des Druckgehäuses 36 nicht nur zur Filterung, sondern außerdem zur Abkühlung und Mischung der von den beiden Generatorstufen 20, 30 erzeugten Gase.

### Bezugszeichenliste

- 20: innere Generatorstufe
- 21: Doppelfalz
- 22: Zünder
- 23: Deckel des Druckgehäuses 26
- 24: Brennkammer
- 25: Volumenausgleichsstück
- 26: Druckgehäuse der inneren Generatorstufe
- 28: Ausströmöffnungen des Druckgehäuses 26
- 29: Verdämmfolie für Ausströmöffnungen 28
- 29a: Rückstromschutz für Ausströmöffnungen 28
- 30: äußere Generatorstufe
- 32: Zünder
- 34: Brennkammer
- 35: Volumenausgleichsstück
- 36: Druckgehäuse der äußeren Generatorstufe38 Ausströmöffnungen des Druckgehäuses 36
- 39: Verdämmfolie für Ausströmöffnungen 38 .
- 40: Boostercontainer
- 42: Auffanggitter
- 44: Flansch
- 46: Bodenplatte
- 50: Filtereinheit
- 54: Innenraum des Filtergehäuses
- 56: Filtergehäuse
- 58: Ausströmöffnungen des Filtergehäuses
- 60: Schweißstellen

## Patentansprüche

1. Gasgenerator, insbesondere für Luftsackmodule in Kraftfahrzeugen, mit zwei Generatorstufen (20, 30), die jeweils in einem eigenen separaten Druckgehäuse (26, 36) wenigstens einen Zünder (22, 32), zumindest eine Treibladung und wenigstens eine Brennkammer (24, 34) umfassen, wobei eine innere Generatorstufe (20) zumindest im Wesentlichen innerhalb einer äußeren Generatorstufe (30) angeordnet ist,
**dadurch gekennzeichnet,**
**dass** beide Generatorstufen (20, 30) zumindest teilweise zusammen mit einer gemeinsamen, außerhalb des Druckgehäuses (36) der äußeren Generatorstufe (30) angeordneten Filtereinheit (50) in einem gemeinsamen Filtergehäuse (56) angeordnet sind.

2. Gasgenerator nach Anspruch 1,
**dadurch gekennzeichnet,**
**dass** das Druckgehäuse (36) der äußeren Generatorstufe (30) zylindrisch ist und die Zünder (22, 32) der beiden Generatorstufen (20, 30) zumindest näherungsweise symmetrisch bezüglich einer Mittelachse des Druckgehäuses (36) angeordnet sind.

3. Gasgenerator nach Anspruch 1 oder 2,
**dadurch gekennzeichnet,**
**dass** beide Generatorstufen (20, 30) zylindrisch sind.

4. Gasgenerator nach einem der vorhergehenden Ansprüche,
**dadurch gekennzeichnet,**
**dass** Mittelachsen aller Zünder (22, 32) und Gehäuse (26, 36, 56) sowie der Filtereinheit (50) in einer gemeinsamen Ebene liegen.

5. Gasgenerator nach einem der vorstehenden Ansprüche,
**dadurch gekennzeichnet,**
**dass** die innere Generatorstufe (20) die äußere Generatorstufe (30) in der Höhe fast vollständig ausfüllt.

6. Gasgenerator nach einem der vorstehenden Ansprüche,
**dadurch gekennzeichnet,**
**dass** die Filtereinheit (50) und die beiden Generatorstufen (20, 30) das Filtergehäuse (56) zumindest im Wesentlichen vollständig ausfüllen.

7. Gasgenerator nach einem der vorstehenden Ansprüche,
**dadurch gekennzeichnet,**
**dass** die Filtereinheit (50) ringförmig ausgebildet ist und die äußere Generatorstufe (30) umgibt.

8. Gasgenerator nach Anspruch 7,
**dadurch gekennzeichnet,**
**dass** die äußere Generatorstufe (30) eine größere axiale Länge aufweist als der Filterring (50).

9. Gasgenerator nach einem der vorstehenden Ansprüche,
**dadurch gekennzeichnet,**
**dass** das Druckgehäuse (36) der äußeren Generatorstufe (30) Ausströmöffnungen (38) besitzt, welche auf Höhe des unteren Endes der Filtereinheit (50) angeordnet sind und in einen die Filtereinheit (50) aufnehmenden Raum (54) münden.

10. Gasgenerator nach Anspruch 9,
**dadurch gekennzeichnet,**
**dass** die Ausströmöffnungen (38) des Druckgehäuses (36) der äußeren Generatorstufe (30) tiefer liegen als Ausströmöffnungen (58) des Filtergehäuses (56), die bevorzugt sich etwa auf gleicher Höhe befinden wie Ausströmöffnungen (28) des Druckgehäuses (26) der inneren Generatorstufe (20).

11. Gasgenerator nach einem der vorstehenden Ansprüche,
**dadurch gekennzeichnet,**
**dass** das Druckgehäuse (26) der inneren Generatorstufe (20) Ausströmöffnungen (28) besitzt, die radial in die äußere Generatorstufe (30) münden.

12. Gasgenerator nach einem der vorstehenden Ansprüche,
**dadurch gekennzeichnet,**
**dass** Ausströmöffnungen (28) des Druckgehäuses (26) der inneren Generatorstufe (20) im oberen Bereich der inneren Generatorstufe (20) angeordnet sind.

13. Gasgenerator nach einem der vorstehenden Ansprüche,
**dadurch gekennzeichnet,**
**dass** das Druckgehäuse (36) der äußeren Generatorstufe (30) in einem unteren Bereich radiale Ausströmöffnungen (38) besitzt.

14. Gasgenerator nach einem der vorstehenden Ansprüche,
**dadurch gekennzeichnet,**
**dass** das Filtergehäuse (56) auf Höhe der Filtereinheit (50) eine radiale Erweiterung aufweist.

15. Gasgenerator nach einem der vorstehenden Ansprüche,
**dadurch gekennzeichnet,**
**dass** die Zünder (22, 32) der Generatorstufen (20, 30) an einer gemeinsamen Bodenplatte (46) befestigt sind.

16. Gasgenerator nach einem der vorstehenden Ansprüche,
**dadurch gekennzeichnet,**
**dass** alle Schweißverbindungen (60) zwischen die Druckgehäuse (26, 36) bildenden Bauteilen durch das gleiche Schweißverfahren, insbesondere durch Kondensatorentladungsschweißen, Laserschweißen oder Reibschweißen, gebildet sind.

17. Gasgenerator nach einem der vorstehenden Ansprüche,
**dadurch gekennzeichnet,**
**dass** das Filtergehäuse (56) durch eine Umformung, insbesondere eine Rollierung oder Bördelung, an den beiden Generatorstufen (20, 30) befestigt ist.

18. Gasgenerator nach einem der vorstehenden Ansprüche,
**dadurch gekennzeichnet,**
**dass** das Filtergehäuse (56) als Generatoraußengehäuse ausgebildet ist.

19. Gasgenerator nach einem der vorstehenden Ansprüche,
**dadurch gekennzeichnet,**
**dass** das Filtergehäuse (56) einen Befestigungsflansch (44) zur Befestigung an einem Luftsackmodul aufweist.

20. Gasgenerator nach einem der vorstehenden Ansprüche,
**dadurch gekennzeichnet,**
**dass** Ausströmöffnungen (58) des Filtergehäuses (56) in einem oberen Bereich der Filtereinheit (50) vorgesehen sind.

21. Gasgenerator nach einem der vorstehenden Ansprüche,
**dadurch gekennzeichnet,**
**dass** das Filtergehäuse (56) insbesondere zur Unterstützung einer Druckpufferfunktion durch den mittels der Generatorstufen (20, 30) erzeugbaren Gasdruck ausdehnbar ausgebildet ist.

22. Gasgenerator nach einem der vorstehenden Ansprüche,
**dadurch gekennzeichnet,**
**dass** das Filtergehäuse (56) die Generatorstufen (20, 30), die Filtereinheit (50) und eine den Generatorstufen (20, 30) gemeinsame Bodenplatte (46) klammerartig umschließt.

## Claims

1. A gas generator, in particular for airbag modules in motor vehicles, comprising two generator stages (20, 30) which each include, in a separate pressure housing (26, 36), at least one respective igniter (22, 32), at least one propellant charge and at least one combustion chamber (24, 34), with an inner generator stage (20) being arranged at least substantially inside an outer generator stage (30),
**characterized in that**
both generator stages (20, 30) are at least partly arranged in a common filter housing (56) together with a common filter unit (50) arranged outside the pressure housing (36) of the outer generator stage (30).

2. A gas generator in accordance with claim 1, **characterized in that** the pressure housing (36) of the outer generator stage (30) is cylindrical and the igniters (22, 32) of the two generator stages (20, 30) are arranged at least approximately symmetrical with respect to a central axis of the pressure housing (36).

3. A gas generator in accordance with claim 1 or claim 2, **characterized in that** both generator stages (20, 30) are cylindrical.

4. A gas generator in accordance with any one of the preceding claims, **characterized in that** central axes of all igniters (22, 32) and housings (26, 36, 56) as well as- of the filter unit (50) are disposed in a common plane.

5. A gas generator in accordance with any one of the preceding claims, **characterized in that** the inner generator stage (20) almost completely fills the outer generator stage (30) in height.

6. A gas generator in accordance with any one of the preceding claims, **characterized in that** the filter unit (50) and the two generator stages (20, 30) at least substantially completely fill the filter housing (56).

7. A gas generator in accordance with any one of the preceding claims, **characterized in that** the filter unit (50) is made in ring shape and surrounds the outer generator stage (30).

8. A gas generator in accordance with claim 7, **characterized in that** the outer generator stage (30) has a larger axial length than the filter ring (50).

9. A gas generator in accordance with any one of the preceding claims, **characterized in that** the pressure housing (36) of the outer generator stage (30) has outflow openings (38) which are arranged at the level of the lower end of the filter unit (50) and open into a space (54) receiving the filter unit (50).

10. A gas generator in accordance with claim 9, **characterized in that** the outflow openings (38) of the pressure housing (36) of the outer generator stage (30) lie lower than outflow openings (58) of the filter housing (56) which are preferably disposed approximately at the same level as outflow openings (28) of the pressure housing (26) of the inner generator stage (20).

11. A gas generator in accordance with any one of the preceding claims, **characterized in that** the pressure housing (26) of the inner generator stage (20) has outflow openings (28) which open radially into the outer generator stage (30).

12. A gas generator in accordance with any one of the preceding claims, **characterized in that** outflow openings (28) of the pressure housing (26) of the inner generator stage (20) are arranged in the upper region of the inner generator stage (20).

13. A gas generator in accordance with any one of the preceding claims, **characterized in that** the pressure housing (36) of the outer generator stage (30) has radial outflow openings (38) in a lower region.

14. A gas generator in accordance with any one of the preceding claims, **characterized in that** the filter housing (56) has a radially widened portion at the level of the filter unit (50).

15. A gas generator in accordance with any one of the preceding claims, **characterized in that** the igniters (22, 32) of the generator stages (20, 30) are secured to a common base plate (46).

16. A gas generator in accordance with any one of the preceding claims, **characterized in that** all weld connections (60) between components forming the pressure housings (26, 36) are made by the same welding process, in particular by capacitor discharge welding, by laser welding or by friction welding.

17. A gas generator in accordance with any one of the preceding claims, **characterized in that** the filter housing (56) is secured by a reshaping operation, in particular by a rolled joint or by a beaded joint, to the two generator stages (20, 30).

18. A gas generator in accordance with any one of the preceding claims, **characterized in that** the filter housing (56) is made as an outer housing of a generator.

19. A gas generator in accordance with any one of the preceding claims, **characterized in that** the filter housing (56) has a securing flange (44) for the attachment to an airbag module.

20. A gas generator in accordance with any one of the preceding claims, **characterized in that** outflow openings (58) of the filter housing (56) are provided in an upper region of the filter unit (50).

21. A gas generator in accordance with any one of the preceding claims, **characterized in that** the filter housing (56) is in particular made in a dilatable manner to assist a pressure buffer function by the gas pressure which can be generated by means of the generator stages (20, 30).

22. A gas generator in accordance with any one of the preceding claims, **characterized in that** the filter housing (56) surrounds the generator stages (20, 30), the filter unit (50) and a base plate (46) common to the generator stages (20, 30) in the manner of a clamp.

## Revendications

1. Générateur de gaz, en particulier pour modules d'airbag dans des véhicules automobiles, comportant deux étages de générateur (20, 30) qui comprennent chacun, dans un carter de pression (26, 36) individuel, au moins un dispositif d'allumage (22, 32), au moins une charge propulsive et au moins une chambre de combustion (24, 34), un étage de générateur intérieur (20) étant disposé au moins sensiblement à l'intérieur d'un étage de générateur (30) extérieur,
**caractérisé en ce que**
les deux étages du générateur (20, 30) sont disposés au moins partiellement, en même temps qu'une unité de filtration (50) commune disposée à l'extérieur du carter de pression (36) de l'étage de générateur extérieur (30), dans un carter de filtre (56) commun.

2. Générateur de gaz selon la revendication 1,
**caractérisé en ce que**
le carter de pression (36) de l'étage de générateur extérieur (30) est cylindrique et les dispositifs d'allumage (22, 32) des deux étages de générateur (20, 30) sont disposés de façon au moins sensiblement symétrique par rapport à un axe médian du carter de pression (36). "

3. Générateur de gaz selon la revendication 1 ou 2,
**caractérisé en ce que**
les deux étages de générateur (20, 30) sont cylindriques.

4. Générateur de gaz selon l'une des revendications précédentes,
**caractérisé en ce que**
les axes médians de l'ensemble des dispositifs d'allumage (22, 32) et carters (26, 36, 56) ainsi que de l'unité de filtration (50) sont situés dans un plan commun.

5. Générateur de gaz selon l'une des revendications précédentes,
**caractérisé en ce que**
l'étage de générateur intérieur (20) remplit presque complètement l'étage de générateur extérieur (30) en hauteur.

6. Générateur de gaz selon l'une des revendications précédentes,
**caractérisé en ce que**
l'unité de filtration (50) et les deux étages de générateur (20, 30) remplissent le carter de filtre (56) de façon au moins pratiquement complète.

7. Générateur de gaz selon l'une des revendications précédentes,
**caractérisé en ce que**
l'unité de filtration (50) est de forme annulaire et entoure l'étage de générateur extérieur (30).

8. Générateur de gaz selon la revendication 7,
**caractérisé en ce que**
l'étage de générateur extérieur (30) présente une longueur axiale plus grande que l'anneau de filtration (50).

9. Générateur de gaz selon l'une des revendications précédentes,
**caractérisé en ce que**
le carter de pression (36) de l'étage de générateur extérieur (30) possède des orifices d'évacuation (38) qui sont disposés au niveau de l'extrémité inférieure de l'unité de filtration (50) et débouchent dans un compartiment (54) recevant l'unité de filtration (50).

10. Générateur de gaz selon la revendication 9,
**caractérisé en ce que**
les orifices d'évacuation (38) du carter de pression (36) de l'étage de générateur extérieur (30) sont situés plus bas que des orifices d'évacuation (58) du carter de filtre (56) qui, de préférence, sont situés à peu près au même niveau que des orifices d'évacuation (28) du carter de pression (26) de l'étage de générateur inférieur (20).

11. Générateur de gaz selon l'une des revendications précédentes,
**caractérisé en ce que**
le carter de pression (26) de l'étage de générateur inférieur (20) possède des orifices d'évacuation (28) qui débouchent radialement dans l'étage de générateur extérieur (30).

12. Générateur de gaz selon l'une des revendications précédentes,
**caractérisé en ce que**
des orifices d'évacuation (28) du carter de pression (26) de l'étage de générateur inférieur (20) sont disposés dans la région supérieure de l'étage de générateur inférieur (20).

13. Générateur de gaz selon l'une des revendications précédentes,
**caractérisé en ce que**
le carter de pression (36) de l'étage de générateur extérieur (30) possède, dans une région inférieure, des orifices d'évacuation radiaux (38).

14. Générateur de gaz selon l'une des revendications précédentes,
**caractérisé en ce que**
le carter de filtre (56) présente une extension radiale au niveau de l'unité de filtration (50).

15. Générateur de gaz selon l'une des revendications précédentes,
**caractérisé en ce que**
les dispositifs d'allumage (22, 32) des étages de générateur (20, 30) sont fixés sur une plaque de base (46) commune.

16. Générateur de gaz selon l'une des revendications précédentes,
**caractérisé en ce que**
toutes les soudures (60) entre des éléments formant les carters de pression (26, 36) sont réalisées par le même procédé de soudage, en particulier par soudage par décharge de condensateur, soudage laser ou soudage par friction.

17. Générateur de gaz selon l'une des revendications précédentes,
**caractérisé en ce que**
le carter de filtre (56) est fixé sur les deux étages de générateur (20, 30) par déformation, en particulier un roulage ou un sertissage.

18. Générateur de gaz selon l'une des revendications précédentes,
**caractérisé en ce que**
**caractérisé en ce que**
le carter de filtre (56) est réalisé en tant que carter externe du générateur.

19. Générateur de gaz selon l'une des revendications précédentes,
**caractérisé en ce que**
le carter de filtre (56) présente une bride de fixation (44) pour fixation sur un module d'airbag.

20. Générateur de gaz selon l'une des revendications précédentes,
**caractérisé en ce que**
des orifices d'évacuation (58) du carter de filtre (56) sont prévus dans une région supérieure de l'unité de filtration (50).

21. Générateur de gaz selon l'une des revendications précédentes,
**caractérisé en ce que**
le carter de filtre (56) est réalisé de manière expansible par la pression du gaz pouvant être générée au moyen des étages du générateur (20, 30), en particulier pour assister une fonction d'équilibrage de la pression.

22. Générateur de gaz selon l'une des revendications précédentes,
**caractérisé en ce que**
le carter de filtre (56) entoure, à la manière d'une agrafe, les étages du générateur (20, 30), l'unité de filtration (50) et une plaque de base (46) commune aux étages du générateur (20, 30).
